# EUROPEAN PATENT APPLICATION

(11) **EP 3 530 724 A1**
(43) Date of publication of application: **28.08.2019**
(21) Application number: 19157363.3
(22) Date of filing: 15.02.2019
(51) Int. Cl.: C12G 1/02, C12G 1/032

(54) **METHOD AND APPARATUS FOR CAP PLUNGING**

(30) Priority: 21.02.2018 IT 201800002911
(71) Applicant: Noform S.r.l., 30020 Meolo (VE) (IT)
(72) Inventor: CROSATO, REMO, 30020 MEOLO (IT); CROSATO, BRUNO, 30020 MEOLO (IT)
(74) Representative: Citron, Massimiliano

(57) **Abstract**

A fulling apparatus is described (30) for a vegetable product (L) in crushed form, preferably must, set in fermentation inside a tank (12) and capable of generating a floating solid cap (CP), comprising:
-a frame movable on substantially horizontal guides (22) placed at the level of the top of the tank (12;
- a fulling piston (70) which is equipped with a fulling plate (72) and is movable relative to the frame along a vertical axis (Y) to insert the plate inside the tank and to full a cap therein;
wherein the vertical axis (Y) of the fulling piston (70) is mounted on the frame so that it can be moved along a circumference.

## Description

The invention relates to an apparatus and a method for processing a vegetable product in the form of crushed grapes. The following description will refer by way of example to winemaking, a field in which the invention has proved particularly effective.

It is known that, during fermentation of must, a cap of marc is formed over the must and is soaked only with the layer immediately below. To improve the quality of the wine, such as for example extraction of aromas from the skins, it is necessary to break the cap periodically. A system is known from EP 2 060 624. The cap-breaker represents the modern variant of the ancient method of immersing the marc cap in the must with the use of sticks or other (fulling), and is normally constituted by a piston that pushes a shovel or a disk onto the upper part of the cap, breaking it and immersing it into the must.

The present invention has as its object the construction of a fulling apparatus different from the previous ones, improving the state of the art.

This object is achieved with a fulling apparatus and method as defined in the appended claims.

A first aspect of the invention is a first method of fulling of a vegetable product under crushed form, preferably must, set in fermentation inside a tank and able to generate a solid cap floating on a liquid part, the method being performed by an electronic device, e.g. programmable like a PLC or a microprocessor, arranged to control the movements of a fulling piston equipped with a fulling plate and a mechanical sprayer adapted for spraying liquid, for example must, inside the tank, with the steps of
(a) driving the sprayer to spray liquid over an area of the cap;
(b) placing the fulling plate over said area;
(c) driving the fulling piston to lower the fulling plate and thus filling said area.

Advantageously, a preferred step (d) of the method is continuing spraying the area engaged by the fulling plate during its sinking action.

Advantageously, a preferred step (e) of the method is moving the spraying to the next area of the cap to be engaged by the fulling plate and/or to all or part of the area of the cap.

The steps (d) and (e) may be performed together or individually after steps (a)÷(c).

Thanks to the coordination of the fulling piston and the mechanical sprayer, the whole cap can be fulled, more efficiently and in an automatic way.

Preferably, in the first method the overall area of the cap is subdivided into sub-areas, and each sub-area is processed with steps (a) - (b) - (c) or with steps (a) - (b) - (c) - (d) or with steps (a) - (b) - (c) - (e) or with steps (a) - (b) - (c) - (d) - (e) until the whole cap is fulled.

Preferably, in the first method the fulling piston and the mechanical sprayer are installed on an apparatus located externally above the tank. In particular, the apparatus is able to move over a plurality of tanks to full their contents and is controlled by the electronic device, which controls the position of the apparatus in order to move it in sequence above each tank of the plurality to full their contents according to one or each of the aforementioned steps. Or, the method provides the optional step of controlling the position of the apparatus via the electronic device in order to move it in sequence over each tank of the plurality to full their contents according to one or each of the aforementioned steps.

Another aspect of the invention is a second method of fulling a vegetable product under crushed form, preferably must plus peel, in fermentation inside a tank and able to generate a solid cap floating on a liquid part, the method being performed by an electronic device, e.g. programmable like a PLC or a microprocessor, arranged to control the position of the vertical axis (in use) of a fulling piston equipped with a fulling plate,
said position being determined in a horizontal plane by a polar (angular) coordinate along a circumference and a linear coordinate along a radius or diameter of the circumference, with the steps of
(a1) positioning the vertical axis over an area of the cap by moving the axis by a certain angle along the circumference and/or by a certain distance along the radius or diameter;
(b1) driving the fulling piston to lower the fulling plate and thus full said area.

Thanks to the coordination of the fulling piston with respect to the two degrees of freedom it is possible to full the whole cap, more efficiently and automatically.

Preferably, in the second method the overall area of the cap is subdivided into sub-areas, and each sub-area is processed with steps (a1) - (b1) until the whole cap is fulled.

Preferably, in the second method the fulling piston is installed on an apparatus placed externally above the tank. In particular, the apparatus is capable of moving over a plurality of tanks to full their contents and is controlled by the electronic device, which controls the position of the apparatus in order to move it in sequence over each tank of the plurality to full their contents according to one or each of the aforementioned steps.

An apparatus which allows implementing the first and/or second fulling method is another aspect of the invention, and is defined hereinafter.

The apparatus comprises:
a frame movable on substantially horizontal guides placed at the level of the top of the tank, e.g. fixed at the top of the tank;
a fulling piston which is equipped with a fulling plate and is movable with respect to the frame along a vertical axis (in use) to insert the plate inside the tank and full a cap therein;
wherein the vertical axis of the fulling piston is mounted on the frame so that it can be moved along a circumference.

In a variant, the frame is able to slide on substantially horizontal guides placed at the level of the top of the tank.

In a second variant, the frame can be moved manually or automatically traveling on wheels: Once the ideal working position has been found above a tank, through a system of hooks it is possible to lock the frame to the tank, to the hatch or to the floor of a gangway placed over the tank.

In a variant, the guides are fixed at the top of the tank ot at the walls of the building that contains the tank.

Preferred variants are that the vertical axis (in use) of the fulling piston is mounted on the frame so that it can be moved along a circumference
- always remaining vertical (i.e. orthogonal to a horizontal plane on which the circumference lies) and translating on the circumference remaining parallel to itself; or
- varying its inclination so that it can be moved with a precession motion about a vertical axis (in other words, the vertical axis of the piston is mounted on the frame so that it can be inclined with respect to a horizontal plane in any direction).

In both cases there is the advantage of being able to position the fulling piston over each point of the surface of the cap without moving the entire apparatus with respect to the guides. Thus the processing is faster and less complex. Moreover, given the reachability of every point of the cap, the fulling plate can have a smaller area, thereby minimizing the mechanical efforts or the power on board the apparatus to be able to penetrate the cap (which is notoriously very hard and compact), or - equally - maximizing the penetration effectiveness of the fulling plate. A fulling plate with a smaller fulling area facilitates its insertion into the tank, which usually has an upper opening of lower section.

Preferably the apparatus comprises an actuator to cause the vertical movement of the fulling piston. Although the fulling piston could be operated manually, it is less tiring and more efficient to exploit artificial mechanical energy.

Preferably the vertical axis of the fulling piston is mounted on the frame so that it can also be moved along a diameter or radius of said circumference. This additional degree of freedom not only increases its positioning accuracy but also replaces numerous rotations of the axis with a faster linear translation of the axis along the diameter. Overall, then, the fulling plate can be positioned at a predetermined point above the cap with greater speed.

Preferably the apparatus comprises a sprayer for spraying liquid, e.g. the same liquid or must contained in the tank, above the area of the cap to be fulled. The advantage is to soften the cap with the liquid and to facilitate the fulling.

Preferably, the sprayer comprises a liquid outlet which is mounted movable with respect to the frame, to be lowered into the tank and spray each area of the cap. In particular, the liquid outlet is
- movable vertically with respect to the frame (i.e. the level of the liquid outlet is vertically variable); and/or
- adjustable with respect to the frame to vary the azimuth angle of the direction of the outgoing fluid, e.g. on 360 degrees; and/or
- adjustable with respect to the frame to vary the elevation of the direction of the outgoing fluid, e.g. on 180 degrees.

One or each of the aforementioned positioning degrees of freedom has as its main advantage the precision of spraying the cap, which is obtained by inserting the outlet into the tank and then wetting closely the area of the cap to be fulled later. The aforementioned precision also allows limiting the masses of liquid to be pumped-over.

The sprayer may e.g. be moved together or solidly with the vertical axis of the fulling piston, or is coupled to the frame so that it can be moved like the vertical axis of the fulling piston.

Preferably, to move the vertical axis of the fulling piston and/or the sprayer, the apparatus comprises an actuator to cause the displacement. In particular, the apparatus may comprise an actuator dedicated to carry out only one of the kinematic degrees of freedom described above.

As a variant, advantageously the apparatus comprises for the vertical axis of the fulling piston both the capacity of horizontal linear translation and of rotation about a vertical axis. A simple and robust structure to allow this option envisages that the apparatus comprises a horizontal platform rotatably mounted on the frame, wherein the platform in turn comprises a horizontal linear guide on which the vertical axis of the fulling piston is translatably mounted.

As a preferred variant, the apparatus comprises on the frame a thrust bearing equipped with a toothing, on the horizontal platform being mounted integrally an electric motor with a shaft engaged on the toothing, so that the rotation of the shaft corresponds to a rotation of the platform on the thrust ring.

Preferably the apparatus comprises a programmable device, e.g. a PLC or microprocessor, which is adapted to control the actuators so as to carry out the steps of the aforementioned method, in particular to automatically move the vertical axis of the fulling piston and/or the sprayer outlet and/or with predetermined movements. The programmable device can also be remote, i.e. not mounted on the apparatus, while performing the same functions.

Each actuator defined here may be e.g. an electric rotary motor or a pneumatic linear actuator.

Preferred embodiments of the invention will now be described with reference to the attached drawing, wherein
fig. 1 shows a side view of a wine-making tank;
fig. 2 shows a view from above of a fuller;
fig. 3 shows fulling patterns.

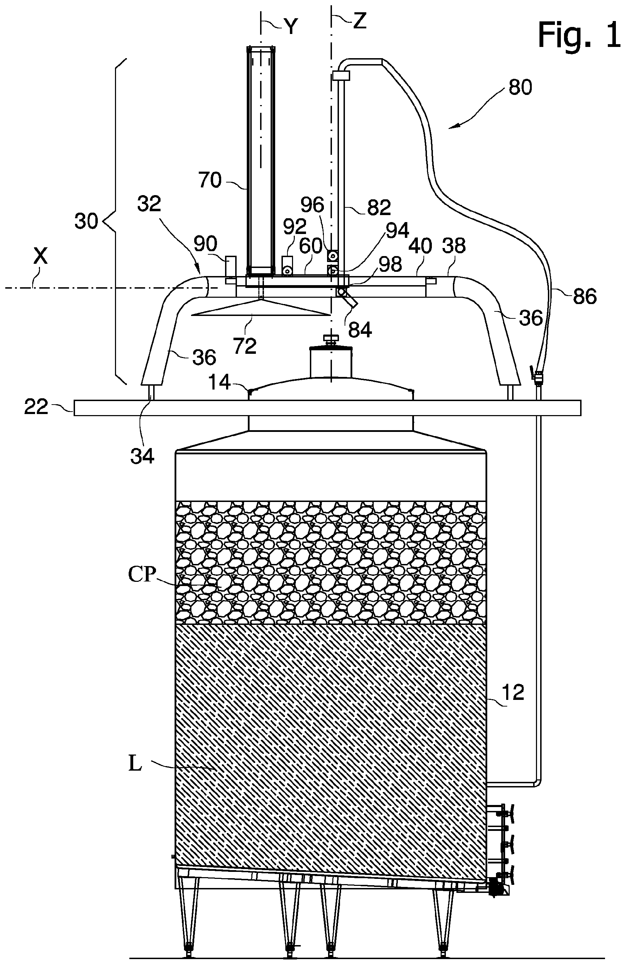

Fig. 1 shows a tank 12 filled with crushed grapes, which are separated by fermenting into a liquid part L and a solid floating cap CP.

On the top of the tank 12, one per side of the tank 12, there are fixed to the sides of a manhole 14, two parallel and horizontal rails 22 on which a fulling apparatus 30 rests. The fixing of the rails 22 does not necessarily have to take place on the tank 12, since they can be suspended e.g. to the walls of the winery. Alternatively, the apparatus may move freely on wheels, moved either manually or by electric or pneumatic motors or else.

The fulling apparatus 30 is slidingly movable on the rails 22, one on each side, by means of a supporting frame 32 equipped at the bottom with skids or carriages 24, for example equipped with wheels, for slidingly engaging a rail 22. The supporting frame 32 may also be fixed on the rails 22 or movable without rolling means.

The frame 32 preferably comprises four arches or legs 36 supporting an upper horizontal and circular segment 38 equipped at the center with a toothed thrust bearing 40. On the thrust bearing 40 there engage two rotary runners 50 connected to the thrust bearing and two parallel tracks 52 on which a platform 60 is linearly movable.

The two runners 50 can slide on the thrust bearing 40 thanks to an electric motor 90 whose shaft is equipped with a pinion which meshes with the teeth of the thrust ring 40. Then, by activating the electric motor 90, the platform 60 can be rotated with respect to the rest of the frame 32 about a vertical axis Z concentric and coaxial to the thrust bearing 40.

The platform 60 can be translated linearly on the tracks 52 thanks to an electric motor 92 whose shaft is equipped with a grip-coupling with the tracks 52. Then, by activating the electric motor 92, the platform 60 can be translated along a diameter of the thrust bearing 40, i.e. along a horizontal axis X.

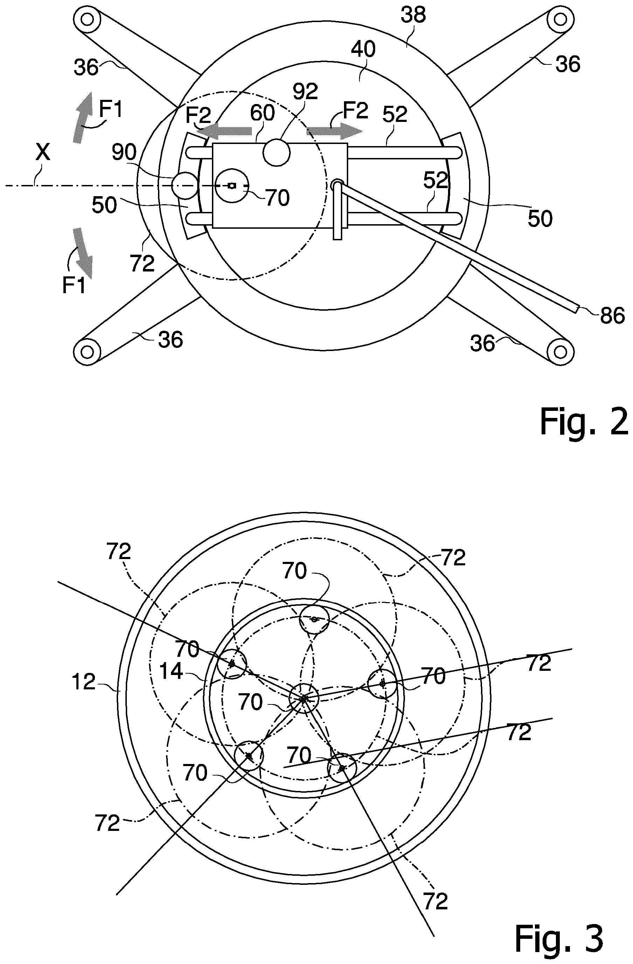

Since the motors 90, 92 are controlled independently by a PLC (not shown), the platform 60 can be moved relative to the rest of the frame 32 either by a rotation about the axis Z (arrows F1, fig. 2) or by translation along the axis X (arrows F2, fig. 2), or by both movements (via the composition of the displacements).

On the platform 60 there are mounted a fulling piston 70, provided with a fulling plate 72, and a liquid sprayer 80, which serves to spray liquid on the part of the cap CP which will be fulled by the plate 72.

The fulling piston 70 is linearly movable along a vertical axis Y parallel to the axis Z, so as to lower the plate 72 into the tank 12 to full part of the cap CP. For this purpose, the plate 72 has horizontal dimensions such as to enter the opening of the manhole cover 14. The fulling piston 70 can be moved thanks to a dedicated electric or pneumatic actuator.

The sprayer 80 comprises a tube 82, on one side provided with an outlet represented by a nozzle or outlet 84 and on the opposite side connected to a flexible supply duct 86.

The supply duct 86 serves to bring liquid to the sprayer 80, from which it comes out through the nozzle or outlet 84. Preferably, the supply duct 86 draws the liquid from the tank 12, at a level where the part L is present. Preferably, the liquid is pushed into the supply duct 86 by means of a pump (not shown).

The tube 82 is rigid and preferably placed vertically. The tube 82 can be moved vertically (parallel to the axis Z) thanks to the action of an electric motor 94, so that the distance between the nozzle or outlet 84 and the hatch 14 can therefore be controlled, and thus the cap CP can be. The tube 82 can also rotate about its vertical axis thanks to the action of an electric motor 96, so that the azimuth angle relative to the liquid outlet of the nozzle or outlet 84 can be controlled.

The nozzle or outlet 84 can oscillate inside a vertical plane with respect to the tube 82 thanks to the action of an electric motor 98, so that the elevation with respect to the horizon of the nozzle or outlet 84 can be controlled.

The degrees of freedom granted by the motors 94, 96, 98 are advantageous but optional, being sufficient for example to mount the tube 82 integral with the plate 72, and/or in a way that the liquid conveyed by the tube 82 ends below or near the plate 72. E.g. a fixed outlet 84 oriented towards the plate 72 is sufficient.

Preferably, each motor 90, 92, 94, 96, 98 is controlled by a PLC or a microprocessor, not shown, programmed to also control any motor means to move the apparatus 30 onto the guides 22 on various tanks and/or the actuator for moving the piston 70 and/or pumping liquid into the tube 82.

Advantageously, the PLC or microprocessor is programmed to perform the fulling operation inside a tank controlling the sequence of activation of the motors 90, 92, 94, 96, 98.

As the plate 72 is smaller than the internal section of the tank 12 at the level of the cap CP, the cap CP has a much larger surface area than the plate 72's. In particular, the PLC or microprocessor is programmed to carry out a sequence of pressings by the plate 72 at different points of the cap CP by means of the sequence of activation of the motors 90, 92.

In what follows we shall assume that to move the piston 80 and to full, the PLC or microprocessor correspondingly activates the actuator of the piston 80.

Fig. 3 shows an example of a scheme for fulling impressions obtainable by the plate 72 on the cap CP by means of a particular program of the PLC or microprocessor. The plan of the hatch 14 and, in dashed lines, six successive positions of the plate 72, can be seen, obtained by a program that coordinates the movements of the platform along the axis X and about the axis Z. In the example, the PLC or microprocessor is programmed to perform a fulling with the plate placed at the center of the cap CP (axis Y coinciding with the axis of the tank 12) and five other fulling actions in which the center of the plate 72 (or the axis Y) coincides with the vertices of a pentagon centered on the hatch 14. The PLC or microprocessor is e.g. programmed to reproduce with the sequence of successive positions of the Y axis the vertices of a, e.g. regular, polygon having n vertices, n >= 3.

The PLC or microprocessor may be programmed so that the number of fulling operations, the positions of the plate 72 and the order of the positions vary from what is shown, to adapt the fulling, for example, to the type and mass of the actual cap.

It is important to note that the PLC or microprocessor may be programmed so that by the fuller 30 one can completely full the cap CP by fulling it one piece at a time. It is enough for example to make any tiling of the impressions of the plate 72, a tiling which covers all or almost all the cap. Clearly, for the plate 72 to reach a decentralized position as in the pentagon of fig. 3, the PLC or microprocessor is programmed so that, first, the plate 72 is inserted at the center of the hatch 14 and then moved radially by moving the platform 60 along the axis X. The PLC or microprocessor is programmed so that the other vertices of the pentagon are reached simply by rotating the platform 60 about the axis Z, from which the advantage is evident deriving from having a rotating support for the piston 70.

To minimize the fulling operations, preferably the section of the plate 72 is approximately equal to the section of the opening of the hatch 14.

To improve every fulling operation of the plate 72, it is preferable to have it preceded by a local spraying of the cap CP, i.e. the PLC or microprocessor is programmed so that the cap CP is sprayed at the point where the plate 72 will go down next. To this aim, the microprocessor or PLC is e.g. programmed 30 to carry out a sequence of activation of the motors 94, 96, 98 able to lower the tube 82 into the tank 12, adjust the nozzle 84 towards the plate 72 (or towards the next area of the cap CP which will be struck by the plate 72) and emit liquid from the nozzle 84 to wet the cap (for this purpose, for example, the PLC or microprocessor is programmed to activate the pumping of liquid in the tube 82).

To improve the winemaking, preferably the PLC or microprocessor is programmed to perform a total or partial spraying of the cap CP, even independently of the fulling. For this purpose the PLC or microprocessor is programmed to carry out only a sequence of activation of the motors 94, 96, 98 to let the tube 82 descend inside the tank 12, orient the nozzle 84 towards one or more programmed directions and emit liquid from the nozzle 84 to wet the cap CP. To better improve the total spraying of the cap CP, the PLC or microprocessor is programmed to execute a sequence of activations of the motors 93, 92 to vary the position of the tube 82 inside the tank 12 (i.e. with respect to the hatch 14) during the spraying or between successive spraying operations. If the position of the tube 82 inside the tank 12 varies, the spraying is more uniform and effective. E.g. the PLC or microprocessor is programmed to move the platform 60 as described above with reference to fig. 3. Undoubtedly the relocation of the nozzle 84 in distinct and distant points above the cap CP improves the spraying uniformity.

## Claims

1. Method for fulling a vegetable product (L) in crushed form, preferably must, set in fermentation inside a tank (12) and capable of generating a solid cap (CP) floating on a liquid part, the method being performed by an electronic device arranged for controlling the movements of a fulling piston (70) provided with a fulling plate (72) and a mechanical sprayer (80) for spraying liquid, e.g. must, inside the tank, with the steps of
(a) driving the sprayer (80) to spray liquid over an area of the cap;
(b) positioning the fulling plate (72) above said area;
(c) driving the fulling piston (70) to lower the fulling plate (72) and thus fulling said area to break the cap thereof.

2. Method according to claim 1, with the step (d) following step (c) of continuing to spray the area engaged by the fulling plate (72) during the sinking action of the plate (72).

3. Method according to claim 1 or 2, with step (e), following step (c), of moving the spraying to the next area of the cap to be engaged by the fulling plate and/or to whole or part of the area of the cap.

4. Method according to any one of the preceding claims, wherein the fulling piston (70) and the mechanical sprayer (80) are installed on an apparatus (30) located externally above the tank (12), the apparatus (30) being able to move over a plurality of tanks (12) to full the content thereof, with the step of controlling, through the electronic device, the position of the apparatus (30) in order to move it sequentially over each tank of the plurality to full their contents according to one or each of the aforementioned steps.

5. Fulling apparatus (30) for a vegetable product (L) in crushed form, preferably must, set in fermentation inside a tank (12) and capable of generating a floating solid cap (CP), comprising:
- a frame movable on substantially horizontal guides (22) placed at the level of the top of the tank (12;
- a fulling piston (70) which is equipped with a fulling plate (72) and is movable relative to the frame along a vertical axis (Y) to insert the plate inside the tank and to full a cap therein;
wherein the vertical axis (Y) of the fulling piston (70) is mounted on the frame so that it can be moved along a circumference.

6. Apparatus (30) according to claim 5, wherein the vertical axis (Y) of the piston (72) is mounted on the frame so as to be able to be moved along a circumference while always remaining vertical and translating on the circumference remaining parallel to it self.

7. Apparatus (30) according to claim 6 or 7, wherein the vertical axis (Y) of the fulling piston (72) is mounted on the frame so as to be able to be moved along a circumference by varying its inclination so as to be able to be moved with a precession motion about a vertical axis.

8. Apparatus (30) according to claim 5 or 6 or 7, wherein the vertical axis (Y) of the fulling piston (72) is mounted on the frame so as to be able to be moved along a diameter or a radius of said circumference.

9. Apparatus (30) according to claim 5 or 6 or 7 or 8, comprising a sprayer for spraying liquid, e.g. the same liquid or must contained in the tank, above an area of the cap to be fulled.

10. Fulling method for a vegetable product in crushed form, preferably must and peel, set in fermentation inside a tank (12) and capable of generating a solid floating cap (CP) on a liquid part (L), the method being performed by an electronic device, e.g. programmable like a PLC or a microprocessor, arranged for controlling the position of the vertical axis (Y) of a fulling piston (70) equipped with a fulling plate (72), said position being determined in a horizontal plane by a polar coordinate along a circumference and a linear coordinate along a radius or diameter of the circumference, with the steps of
(a1) positioning the vertical axis (Y) over an area of the cap (CP) by moving the axis (Y) by a certain angle along the circumference and/or by a certain distance along the radius or diameter;
(b1) controlling the fulling piston (70) to lower the fulling plate (72) and thus press the cap of said area.
